# FASCICULE DE BREVET EUROPEEN

(11) **EP 2 684 182 B1**
(45) Date de publication et mention de la délivrance du brevet: **15.07.2015**
(21) Numéro de dépôt: 12711926.1
(22) Date de dépôt: 23.02.2012
(51) Int. Cl.: G09F 13/04, B60Q 3/02, B41M 3/00, G09F 13/08, G09F 3/10, G09F 21/04

(54) **FILM IMPRIME TRANSLUCIDE PERMETTANT D'AFFICHER UNE INSCRIPTION PAR RETRO-ECLAIRAGE**
DURCHSCHEINENDE BEDRUCKTE FOLIE ZUR ANZEIGE EINER AUFSCHRIFT MITTELS HINTERGRUNDBELEUCHTUNG
TRANSLUCENT PRINTED FILM ENABLING AN INSCRIPTION TO BE DISPLAYED BY BACKLIGHTING

(30) Priorité: 07.03.2011 FR 1151852
(43) Date de publication de la demande: 15.01.2014
(73) Titulaire: Peugeot Citroën Automobiles S.A., 78140 Vélizy Villacoublay (FR)
(72) Inventeur: RICHARD, Olivier, F-68130 Wittersdorf (FR)
(86) Numéro de dépôt international: PCT/FR2012/050379
(87) Numéro de publication internationale: WO 2012/120216

(56) Documents cités:
- EP-A1- 2 028 048
- WO-A2-2006/125174
- GB-A- 2 416 063
- JP-A- 2006 007 623
- JP-A- 2007 292 776
- US-A- 6 101 748
- US-A1- 2003 051 380
- US-A1- 2007 071 917

## Description

La présente invention concerne un film imprimé translucide permettant d'afficher une inscription par rétro-éclairage.

Le document JP 2007-292776 A est représentatif de l'art antérieur et décrit un mode de réalisation connu d'une inscription rétro-éclairée.

Elle s'applique en particulier à un seuil de porte faisant partie d'une garniture de longeron d'un véhicule automobile.

Une garniture de longeron d'un véhicule automobile porte un seuil de porte avec des finitions différentes et pour rendre le véhicule personnalisé, le seuil de porte peut être rétro-éclairé en affichant une inscription, telle qu'un symbole, un décor ou un logo.

A cet effet, le seuil de porte, qui peut être fabriqué en matière plastique ou en inox, comprend une découpe encadrée par un renfoncement dans lequel repose un film imprimé translucide portant l'inscription rétro-éclairée.

Cependant, la conception de ce film est telle qu'une partie des rayons lumineux provenant de la source de lumière de rétro-éclairage subit plusieurs réflexions dans le film pour s'échapper extérieurement, créant un filet lumineux visible désagréable entourant le film.

La présente invention a pour but de palier l'inconvénient ci-dessus.

A cet effet, l'objet de la présente invention est de proposer un film imprimé translucide permettant d'afficher une inscription par rétro-éclairage, et qui est caractérisé en ce qu'il comprend une plaque de support en un matériau translucide au travers de laquelle peut être visualisée l'inscription et plusieurs couches superposées appliquées à la face arrière de la plaque de support destinée à être tournée vers la source de lumière et comprenant successivement, à partir de cette face arrière, une première couche opaque comportant en son sein l'inscription devant être affichée, une seconde couche ayant un pourcentage déterminé de transmission de lumière et d'une couleur de celle de l'inscription devant être affichée, une troisième couche opaque ne réfléchissant pas la lumière et ayant en son sein la même inscription que celle de la première couche opaque, ces deux inscriptions coïncidant l'une avec l'autre.

La première couche opaque est d'une couleur de fond.

La seconde couche est de couleur blanche.

La troisième couche opaque est de couleur noire.

La plaque de support est en polycarbonate.

L'épaisseur de la plaque de support est d'environ 500 µm.

Les premières à troisième couches sont formées à partir d'encres d'impression.

Le film comprend en outre une couche adhésive transparente appliquée sur la troisième couche opaque pour permettre la fixation du film sur un support, tel qu'une plaque de seuil solidaire d'une garniture de longeron d'un véhicule automobile.

L'invention vise également une garniture de longeron d'un véhicule automobile accueillant un seuil de porte rétro-éclairé et qui est caractérisée en ce que le seuil de porte comprend une découpe encadrée par un renfoncement dans lequel repose un film imprimé translucide tel que défini précédemment.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue en perspective éclatée d'une garniture de longeron d'un véhicule automobile et qui est pourvue d'un film imprimé translucide conforme à l'invention ;
- la figure 2 est une vue en coupe de la garniture de longeron de la figure 1 avec tous ses composants assemblés les uns aux autres ;
- la figure 3 est une vue en coupe suivant la ligne III-III du film de la figure 1 ; et
- la figure 4 est une vue de dessus du film de la figure 3 et montrant un exemple d'inscription pouvant apparaître par rétro-éclairage.

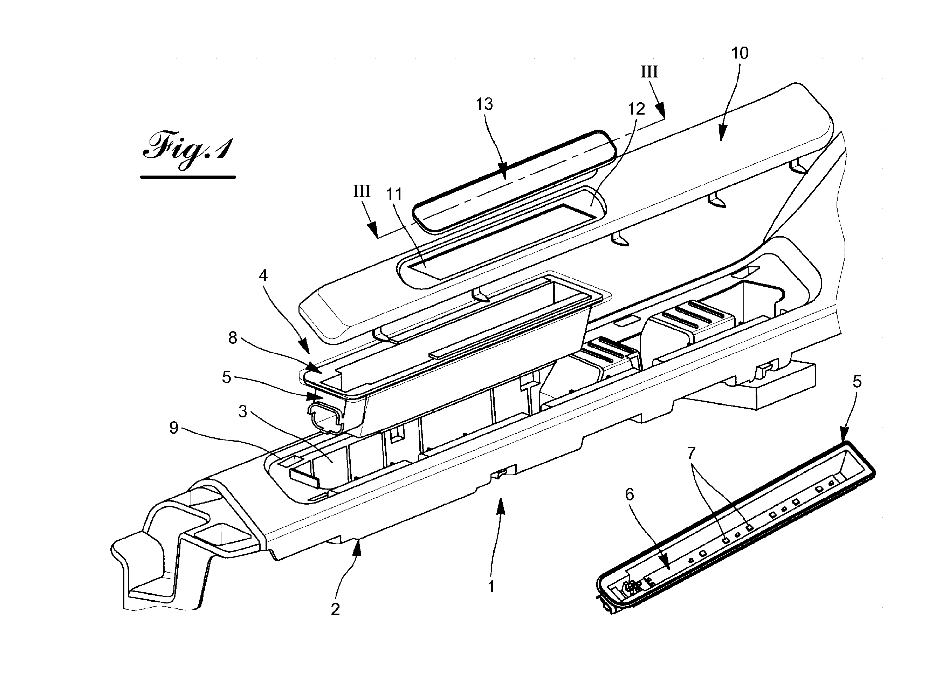

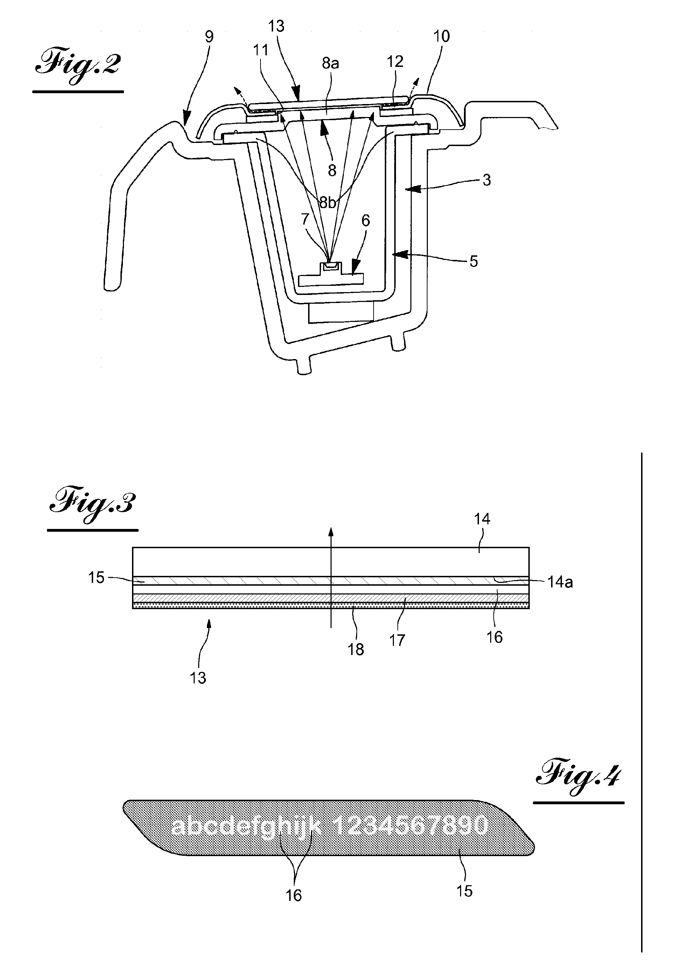

En se reportant aux figures 1 et 2, la référence 1 désigne une garniture de longeron pour un véhicule automobile dont le corps 2 comprend un logement 3 ouvert vers le haut et dans lequel est logé un dispositif d'éclairage 4 comportant un boîtier 5 au fond duquel est fixé un circuit imprimé 6 à diodes électroluminescentes ou LED 7 réparties d'une manière régulière le long de l'axe longitudinal de ce circuit.

L'ouverture supérieure du boîtier 5 est obturée par un couvercle translucide 8.

Le logement 3 du corps de garniture 2 comporte, autour de son bord supérieur, un renfoncement 9 qui présente le même contour que celui d'un seuil de porte 10 qui repose sur la garniture de longeron 1. Le seuil de porte 10 comprend une découpe traversante 11 faisant face au dispositif d'éclairage 4, la découpe 11 étant encadrée par un renfoncement 12 dans lequel repose un film imprimé translucide 13 conforme à l'invention et de forme conjuguée au renfoncement 12. Le film 13 porte une inscription, telle que des symboles, un logo, un décor ou tout autre graphique analogue, pouvant être visible par rétro-éclairage.

Les diodes électroluminescentes 7 constituant la source de lumière, peuvent être contrôlées par un commutateur électrique qui est en position de marche quand la porte du véhicule est ouverte de manière que la lumière émise par ces diodes traverse le couvercle translucide 8 et le film 13 pour faire apparaître à une personne montant dans le véhicule ou descendant de celui-ci l'inscription sous forme lumineuse et d'une couleur déterminée.

Le couvercle translucide 8 du boîtier 5 comporte au niveau de la découpe 11 dans le seuil de porte 10 une partie surélevée 8a pour aligner le niveau de la face supérieure du couvercle 8 avec le niveau de la partie emboutie autour de la découpe 11 du seuil de porte 10. Ce dernier peut être en inox ou en matière plastique. Le boîtier 5 repose avec son bord supérieur 8b sur les bords supérieurs du logement 3.

Comme représenté en figure 3, le film 13 de l'invention comprend une plaque de support 14 en un matériau translucide au travers de laquelle peut être visualisée l'inscription devant apparaître par rétro-éclairage lorsque la porte du véhicule est ouverte.

De préférence, la plaque de support 14 est en polycarbonate d'une épaisseur d'environ 500 µm.

Le film 13 comprend en outre plusieurs couches superposées appliquées à la face arrière 14a de la plaque de support 14 destinée à être tournée vers la source de lumière constituée par les diodes électroluminescentes 7.

Ces différentes couches comprennent, à partir de la face arrière 14a, une première couche opaque 15 au sein de laquelle est réalisée l'inscription devant être affichée par rétro-éclairage. Par inscription, on entend tout motif à afficher pouvant être constitué par un logo, des symboles, un décor ou tout autre graphique similaire. La figure 4 représente à titre d'exemple une inscription sous forme de lettres et de chiffres. Bien entendu, l'inscription est réalisée dans la couche opaque 15, qui ne réfléchit pas la lumière provenant de la source à diode électroluminescente 7, et cette inscription est totalement transparente à cette lumière. La couche 15, qui est appliquée sur toute la surface de la plaque de support 14, sauf aux emplacements comportant l'inscription, est d'une couleur, par exemple grise, constituant la couleur de fond du film 13 lorsque vu de dessus.

Le film 13 comprend en outre une seconde couche 16 appliquée sur toute la surface de la couche 15, ayant un pourcentage déterminé de transmission de lumière et d'une couleur de celle de l'inscription devant être affichée par le film 13 par rétro-éclairage. A titre d'exemple, la couleur de la couche 16 est blanche. Le pourcentage de transmission de lumière de la couche 16 est déterminé de façon à éviter de créer un phénomène de halo dans l'inscription à afficher. A titre d'exemple, un tel pourcentage peut être de 50% pour une luminance des inscriptions d'environ 380 à environ 520 cd/m² (candelas par mètre carré).

Le film 13 comprend également une troisième couche opaque 17 ne réfléchissant pas la lumière et ayant, réalisée en son sein, la même inscription que celle de la première couche opaque 15, les deux inscriptions coïncidant l'une au-dessus de l'autre. La couche 17 est appliquée sur la couche 16 et seule la lumière provenant de la source à diodes électroluminescentes 7 peut passer à travers l'inscription réalisée dans la couche 17. Cette dernière est de couleur noire et permet d'empêcher non seulement la lumière d'être réfléchie vers la source de lumière, mais également d'être diffusée par les bords délimitant la couche 17.

Afin de fixer le film 13 dans le renfoncement 12 du seuil de porte 10, une couche d'adhésif 18 en un matériau transparent est appliquée sur toute la surface de la couche opaque 17.

Les différentes couches 15-17 du film 13 sont formées à partir d'encres appliquées par un procédé d'impression sérigraphique.

Lorsque le film translucide 13 est fixé par collage dans le renfoncement 12 du seuil de porte 10 comme représenté en figure 2, la couche 17 empêche tout passage de lumière vers l'extérieur par le contour du film 13 comme symbolisé en pointillés sur cette figure et susceptible de former une fuite de lumière blanche, représentative de la couleur de l'inscription, notamment sur les bords du film 13.

Bien entendu, le film 13 de l'invention peut s'appliquer à tout dispositif autre qu'une garniture de longeron d'un véhicule automobile lorsque l'on souhaite afficher au travers du film une inscription sans risque de fuite de lumière au niveau du contour de ce film.

## Revendications

1. Film imprimé translucide permettant d'afficher une inscription par rétro-éclairage, **caractérisé en ce qu'**il comprend une plaque de support (14) en un matériau translucide au travers de laquelle peut être visualisée l'inscription et plusieurs couches superposées appliquées à la face arrière (14a) de la plaque de support (14) destinée à être tournée vers la source de lumière (7) et comprenant successivement, à partir de cette face arrière (14a), une première couche opaque (15) comportant en son sein l'inscription devant être affichée, une seconde couche (16) ayant un pourcentage déterminé de transmission de lumière et d'une couleur de celle de l'inscription devant être affichée, une troisième couche opaque (17) ne réfléchissant pas la lumière et ayant en son sein la même inscription que celle de la première couche opaque (15), ces deux inscriptions coïncidant l'une avec l'autre.

2. Film imprimé translucide selon la revendication 1, **caractérisé en ce que** la première couche opaque (15) est d'une couleur de fond.

3. Film imprimé translucide selon la revendication 1 ou 2, **caractérisé en ce que** la seconde couche (16) est de couleur blanche.

4. Film imprimé translucide selon l'une des revendications précédentes, **caractérisé en ce que** la troisième couche opaque (17) est de couleur noire.

5. Film imprimé translucide selon l'une des revendications précédentes, **caractérisé en ce que** la plaque de support (14) est en polycarbonate.

6. Film imprimé translucide selon la revendication 5, **caractérisé en ce que** l'épaisseur de la plaque de support (14) est d'environ 500 µm.

7. Film imprimé translucide selon l'une des revendications précédentes, **caractérisé en ce que** les premières à troisième couches (15-17) sont formées à partir d'encres d'impression.

8. Film imprimé translucide selon l'une des revendications précédentes, **caractérisé en ce qu'**il comprend une couche adhésive transparente (18) appliquée sur la troisième couche opaque (17) pour permettre la fixation du film (13) sur un support (10), tel qu'une plaque de seuil solidaire d'une garniture de longeron (1) d'un véhicule automobile.

9. Garniture de longeron (1) d'un véhicule automobile accueillant un seuil de porte rétro-éclairé (10), **caractérisée en ce que** le seuil de porte (10) comprend une découpe (11) encadrée par un renfoncement (12) dans lequel repose un film imprimé translucide (13) tel que défini dans l'une quelconque des revendications précédentes.

## Patentansprüche

1. Durchsichtige bedruckte Folie, die die Anzeige einer Inskription durch Rückbeleuchtung ermöglicht, **dadurch gekennzeichnet, dass** sie eine Trägerplatte (14) aus einem durchsichtigen Material umfasst, durch die die Inskription und mehrere überlagerte Schichten dargestellt werden können, die an die Rückseite (14a) der Trägerplatte (14) angelegt werden, die dazu bestimmt ist, zur Lichtquelle (7) gedreht zu werden, und die nacheinander, und ab dieser Rückseite (14a) eine erste undurchsichtige Schicht (15) umfasst, die in ihrem Inneren die Inskription umfasst, die angezeigt werden soll, eine zweite Schicht (16) mit einem bestimmten Prozentsatz an Lichtdurchlässigkeit und in einer Farbe, die jener der Inskription entspricht, die angezeigt werden soll, eine dritte undurchsichtige Schicht (17), die das Licht nicht reflektiert, und die in ihrem Inneren dieselbe Inskription wie jene der ersten undurchsichtigen Schicht (15) umfasst, wobei diese beiden Inskriptionen miteinander übereinstimmen.

2. Durchsichtige bedruckte Folie nach Anspruch 1, **dadurch gekennzeichnet, dass** die erste undurchsichtige Schicht (15) in einer Hintergrundfarbe ausgeführt ist.

3. Durchsichtige bedruckte Folie nach Anspruch 1 oder 2, **dadurch gekennzeichnet, dass** die zweite Schicht (16) weiß ist.

4. Durchsichtige bedruckte Folie nach einem der vorherigen Ansprüche, **dadurch gekennzeichnet, dass** die dritte undurchsichtige Schicht (17) schwarz ist.

5. Durchsichtige bedruckte Folie nach einem der vorherigen Ansprüche, **dadurch gekennzeichnet, dass** die Trägerplatte (14) aus Polykarbonat gefertigt ist.

6. Durchsichtige bedruckte Folie nach Anspruch 5, **dadurch gekennzeichnet, dass** die Dicke der Trägerplatte (14) etwa 500 µm beträgt.

7. Durchsichtige bedruckte Folie nach einem der vorherigen Ansprüche, **dadurch gekennzeichnet, dass** die erste bis dritte Schicht (15-17) aus Druckfarben gebildet werden.

8. Durchsichtige bedruckte Folie nach einem der vorherigen Ansprüche, **dadurch gekennzeichnet, dass** sie eine durchsichtige Haftschicht (18) umfasst, die an die dritte undurchsichtige Schicht (17) angelegt wird, um die Befestigung der Folie (13) auf einem Träger (10), wie einer Schwellenplatte zu ermöglichen, die fest mit einem Längsträgerbesatz (1) eines Kraftfahrzeugs verbunden ist.

9. Längsträgerbesatz (1) eines Kraftfahrzeugs der eine rückbeleuchtete Türschwelle (10) aufnimmt, **dadurch gekennzeichnet, dass** die Türschwelle (10) einen Ausschnitt (11) umfasst, der durch eine Vertiefung (12) eingerahmt wird, in der eine durchsichtige bedruckte Folie (13) eingebettet ist, wie sie in irgendeinem der vorherigen Ansprüche definiert ist.

## Claims

1. Translucent printed film for displaying an inscription by backlighting, **characterised in that** it comprises a support plate (14) made of a translucent material through which the inscription can be viewed and a plurality of overlaid layers applied to the rear face (14a) of the support plate (14) intended to face the light source (7) and successively comprising, starting from this rear face (14a), a first opaque layer (15) comprising the inscription to be displayed therein, a second layer (16) having a defined light transmission percentage and being the same colour as that of the inscription to be displayed, a third opaque layer (17) not reflecting light and having the same inscription as that of the first opaque layer (15) therein, these two inscriptions coinciding with one another.

2. Translucent printed film as claimed in claim 1, **characterised in that** the first opaque layer (15) is in a background colour.

3. Translucent printed film as claimed in claim 1 or 2, **characterised in** the second layer (16) is white in colour.

4. Translucent printed film as claimed in any of the preceding claims, **characterised in** the third opaque layer (17) is black in colour.

5. Translucent printed film as claimed in any of the preceding claims, **characterised in that** the support plate (14) is made of polycarbonate.

6. Translucent printed film as claimed in claim 5, **characterised in that** the thickness of the support plate (14) is approximately 500 µm.

7. Translucent printed film as claimed in any of the preceding claims, **characterised in that** the first to third layers (15-17) are formed using printing inks.

8. Translucent printed film as claimed in any of the preceding claims, **characterised in that** it comprises a transparent adhesive layer (18) applied onto the third opaque layer (17) to enable the film (13) to be secured onto a support (10), such as a threshold plate rigidly connected to a longitudinal member seal (1) of a motor vehicle.

9. Motor vehicle longitudinal member seal (1) accommodating a backlit door threshold (10), **characterised in that** the door threshold (10) comprises a slot (11) framed by a recess (12) wherein a translucent printed film (13) as defined in any of the preceding claims rests.
